# EUROPEAN PATENT SPECIFICATION

(11) **EP 3 226 089 B1**
(45) Date of publication and mention of the grant of the patent: **26.09.2018**
(21) Application number: 16380015.4
(22) Date of filing: 01.04.2016
(51) Int. Cl.: G05B 19/404

(54) **METHOD FOR CONTROLLING VIBRATIONS IN PARTS**
VERFAHREN ZUR STEUERUNG DER VIBRATIONEN IN TEILEN
PROCÉDÉ POUR CONTRÔLER LES VIBRATIONS DANS DES PIÈCES

(43) Date of publication of application: 04.10.2017
(73) Proprietor: Ideko, S.Coop., 20870 Elgoibar Guipuzcoa (ES)
(72) Inventor: Mancisidor Aizpurua, Iker, 20870 Elgoibar (Guipuzcoa) (ES); Muñoa Gorostidi, Jokin, 20870 Elgoibar (Guipuzcoa) (ES); Merino Hernández, Rubén, 20870 Elgoibar (Guipuzcoa) (ES)
(74) Representative: Cabinet Plasseraud

(56) References cited:
- EP-A2- 1 001 184
- EP-A2- 1 514 638
- US-A1- 2012 010 744

## Description

### Field of the Art

The present invention relates to the industry dedicated to the machining of parts and more specifically to the industry dedicated to treating vibrations generated when the parts are machined.

### State of the Art

Eliminating vibrations in parts during machining processes is increasingly important. Vibrations entail surface defects in the parts obtained after machining. The drawbacks increase, mainly, when the parts are susceptible to bending deformation when machined. In addition, the drawbacks increase when the displacement of the parts is hampered and when they have geometries which complicate the placement of means aimed at preventing vibrations during machining.

Currently additional machining steps are required for correcting the surface defects which involve using specific machinery to carry out said steps, displace the parts to said machinery, etc. In other words, a higher total manufacturing cost. For the purpose of minimizing the surface defects, one option used is to increase the number of passes in machining the parts, the passes being of smaller depth. This option reduces the vibrations in parts during machining, although it entails a considerable reduction in productivity.

Another option currently used for minimizing the surface defects consists of using tooling designed for stiffening the flexible portions of the parts while they are machined and preventing the parts from vibrating as much as possible. In order for said tooling to be minimally effective, it must be arranged as close as possible to the machining point. This leads to the tooling having to be designed according to the geometry of the parts. This fact leads to a high level of economic investment in said tooling and even more when the parts are manufactured on a small scale.

Given the need to stiffen the parts while they are machined as close as possible to the machining pcint, this tooling furthermore leads in many cases to the parts being deformed, losing their geometry and hence not being valid. This means that there is a need to apply additional machining to the parts to recover them, or even to reject them if the recovery thereof is not viable. This tooling is particularly damaging to parts with reduced thicknesses.

A method for controlling vibrations in the parts when machining solving the aforementioned drawbacks is therefore necessary.

The document EP1001184 discloses a machine performing gross movements to machine a piece. A sensor is mounted on the beam in order to sense low frequency vibrations and the measures are sent to a controller. The controller defined the moves of an inertial actuator situated also on the beam in order to compensate the vibration.

The document US2012/0010744 describes a compensation mechanism for the vibration of a rotating engine of a machine tool (chatter), where one or several sensors are fixed to the machine (can also be on a work piece) in order to detect vibrations. The rotation of the motor is then adjusted to avoid such vibration.

### Object of the Invention

The invention relates to a method for controlling vibrations in parts solving the aforementioned drawbacks as well as others that may later arise.

As the parts are susceptible to bending deformation when machined, the method comprises the steps of selecting a system comprising displacement means, actuation means and fixing means; displacing the system to the part using the displacement means; fixing the actuation means firmly to the part using the fixing means; and applying a force against the part using the actuation means in order to actively dampen vibrations when machining the part. Therefore, actively damping vibrations is performed "*in situ"*, i.e., without the need to displace the parts.

The fixing means fix the actuation means to the part by magnetism, pneumatic coupling or hydraulic coupling, Therefore, the part is kept intact in the fixing of the actuation means.

The method comprises using at least one accelerometer arranged to discern the vibrations of the part. Accordingly, the actuation means act depending on the vibrations of the part discerned through the accelerometers. Alternatively, the actuation means act according to a bandwidth between 20-500 Hz in order to actively dampen vibrations when machining the part.

On one hand, the method can additionally comprise obtaining vibration zones of the part before machining the part by means of a first option which comprises applying a "finite element method", a second option which comprises observing the part while it vibrates, a third option which comprises carrying out an experimental modal analysis of the part or a combination of any of these options. In order to apply both the second and third options the part can be made to vibrate using the actuation means.

On the other hand, the method can additionally comprise carrying out a residual stress relaxation after machining the part, for which the part is made to vibrate using the actuation means.

### Description of the Drawings

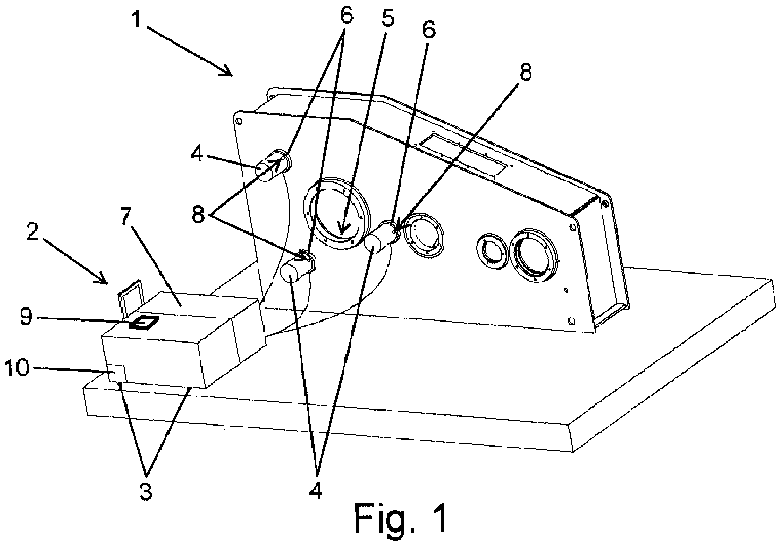

Figure 1 shows a perspective view of a system comprising actuation means, which is suitable for being used in the method for controlling vibrations in parts of the present invention.

### Detailed Description of the Invention

The invention relates to a method for controlling vibrations or chatter in parts (1), the vibrations being generated when the parts (1) are machined. The method controls the vibrations as it can be applied such that it allows treating negative effects of said vibrations before, during and after machining the parts (1). A system (2) suitable for being used according to the described method can also be derived from the description.

The method is particularly aimed at being applied to the most critical parts (1) when they are machined. Hence the method is preferably for parts (1) comprising a reduced thickness with respect to their size, i.e., for parts (1) that are flexible or capable of bending deformation as a result of machining. These parts (1) comprising a thickness in the order of a few millimeters, in addition to a width and/or height in the order of decimeters or even meters. By way of example, these parts (1) comprise a thickness of between 5 to 50 millimeters with respect to a width and height of between 1 to 5 meters.

According to the mentioned application, the method is suitable for metallic parts (1). Therefore, the method is preferably for machine welded steel and/or cast-iron parts (1). Machine welded steel parts (1) are usually heavy, manufactured on a small scale, with complex geometry that includes reduced thicknesses.

The method mainly comprises positioning the part (1) to be machined and the mentioned system (2) close to one another such that a physical interaction between the system (2) and the part (1) is allowed. In this regard, the system (2) is configured such that it is compact and portable. This configuration allows an operator to displace the entire system (2) at the same time. The system (2) comprises displacement means (3) for transport thereof to the part (1). Preferably, the displacement means (3) are wheels.

The system (2) is compact and portable to allow applying the method not only in the production plant, more specifically in a single production area of the plant, as the system (2) is configured such that it can be transported to where the part (1) is located. In other words, the method can be applied to the part (1) *"in situ".* This is of particular importance when the parts (1) comprise a location and/or physical characteristics, such as measurements and material, conditioning the feasibility of their transport or displacement.

The system (2) comprises actuation means (4) configured for applying a force such that they actively damp vibrations. The actuation means (4) comprise one or more inertial actuators. These inertial actuators are configured as units with a volume and weight that can be handled by an operator. Therefore, the inertial actuators can furthermore be arranged in any portion of the part (1), adapting to the different geometries of the parts (1). Each of the inertial actuators comprises a mass which can be actuated to be displaced linearly. Therefore, the actuation means (4) are preferably one or more single-axis electromagnetic actuators.

According to what has been described, the actuation means (4) are arranged in contact with the part (1). In order to machine a zone (5) of one face of the part (1), the actuation means (4) are arranged on said face of the part (1) or on the opposing face of the part (1), which implies increased performance of said actuation means (4) in actively damping vibrations.

In order to arrange the actuation means (4) in the part (1), the system (2) comprises fixing means (6). The fixing means (6) are configured for firm fixing, i.e., without any deformation whatsoever. The interactions between the part (1) and the actuation means (4) are thereby effectively transmitted.

The fixing means (6) are selected depending on the material, surface finish or texture and the geometry of the part (1). The fixing means (6) are selected such that they entail firm fixing in a fast and simple manner while at the same time keeping the part (1) intact, i.e., do not entail structural alteration or modification of the part (1). The fixing means (6) fix the actuation means (4) to the part (1) preferably by magnetism or pneumatic coupling or hydraulic coupling.

Therefore, according to one embodiment, the fixing means (6) allow fixing the actuation means (4) to the part (1) by magnetism directly when the part (1) is of a ferromagnetic material or indirectly when the part (1) is of a non-ferromagnetic material by means of the joint placement of ferromagnetic elements. The fixing means (6) can be magnets. According to another embodiment, said fixing is done by means of suction cups.

The actuation means (4) and the fixing means (6) provide flexibility in their arrangement such that they allow actively damping vibrations in vibration zones coinciding or not coinciding with the machining zones (5), the sources of vibrations. The vibration zones are the portions of the part (1) that suffer displacements due to machining. This flexibility further maximizes the efficiency of the system (2) leading to an increase in productivity, the quality of the parts (1) and the service life of the machining tools and machinery. The parts (1) are obtained without losing their geometry.

The system (2) comprises a control unit (7). The actuation means (4) and the control unit (7) are connected to one another such that information can be transmitted between them. Therefore, the actuation of the actuation means (4) is defined by means of the control unit (7), i.e., the frequency and nominal value of the force that the actuation means (4) apply on the part (1).

According to one operating mode, the actuation means (4) actively dampen vibrations according to a pre-established configuration in the control unit (7). This pre-established configuration covers a suitable bandwidth for actively damping vibrations. This bandwidth is preferably between 20-500 Hz.

According to another operating mode, the parameters of the actuation means (4) are additionally adjusted by means of the control unit (7) according to each of the parts (1) in order to actively dampen vibrations. The adjustable parameters are, for example: high-pass filters, low-pass filters and gain.

For this other operating mode, the system (2) preferably comprises an accelerometer (8), and more preferably several accelerometers (8) to obtain a larger number of measurements, i.e., more information. Each of the accelerometers (8) and the control unit (7) are connected to one another such that the information captured by the accelerometers (8) can be transmitted to the control unit (7). This information relates to the vibration of the part (1). The information, is processed by the control unit (7) to define the actuation of the actuation means (4) and to adjust the parameters of the actuation means (4) depending on the vibration of the part (1), and to thereby optimize the active damping of vibrations when machining the part (1). Preferably, the actuation and the parameters of the actuation means (4) are automatically defined by the control unit (7).

The accelerometers (8) are arranged in a fixed portion of the actuation means (4) for obtaining information relating the vibrations of the part (1). Therefore, one of the accelerometers (8) is preferably arranged in each of the inertial actuators. Alternatively, with the same purpose of discerning the vibration of the part (1) to define the actuation of the actuation means (4) and adjust the parameters of the actuation means (4), the accelerometers (8) can be physically independent units with respect to the actuation means (4).

Each of the parts (1) has its own behavior with respect to vibrations. The method additionally comprises discerning said behavior of the parts (1). Hence, the vibration zones of the parts (1) are obtained to determine the arrangement of the actuation means (4) in each of parts (1) during machining. In this regard, the method comprises a first option, a second option, a third option, or a combination of any of these options.

According to a first option, the method comprises applying a "finite element method" to a 3D model of the part (1). The 3D model of the part (1) is energized such that it vibrates and its behavior in response to the vibrations is analyzed. The vibration zones are obtained by means of this analysis. The actuation means (4) are fixed to the part (1) according to the vibration zones obtained. The vibration frequencies of the part (1) are also obtained by applying the "finite element method", whereby the actuation of the actuation means (4) when machining the part (1) as well as the parameters thereof are also determined.

According to a second option, the operator observes the part (1) and obtains the vibration zones. The vibration zones are obtained based on the experience of the operator as well as the geometries of the part (1). The arrangement of the actuation means (4) in the part (1) is determined according to the vibration zones obtained. In addition to carrying out the first option, the second option can be carried out. In this manner, applying the first option serves to optimize the application of the second option, for example, making it easier for the operator to observe the part (1) for obtaining the vibration zones.

To carry out the second option, the part (1) can be energized to make it easier for the operator to obtain the vibration zones by means of observing the part (1). In this case, the part (1) is energized by means of pre-machining or partially machining the part (1) manually by means of, for example, an impact hammer or any other shaker-like element, or using the actuation means (4) themselves. The actuation means (4) are therefore additionally configured to apply thrust such that the part (1) vibrates. The thrust is determined by means of the control unit (7) . The frequency and nominal value of said thrust, in addition to the parameters of the actuation means (4), can be varied by means of the control unit (7) while carrying out said second option.

According to a third option, the method comprises carrying out an experimental modal analysis of the part (1). In this third option, the part (1) is energized so that it (1) vibrates. While the part (1) vibrates, the vibration of the part (1) is discerned by means of the accelerometers (8). This information is sent to the control unit (7) and the arrangement and actuation of the actuation means (4) when machining the part (1), as well as the parameters thereof, are determined according to said information.

To carry out the third option, the part (1) is energized such that it vibrates preferably using the actuation means (4) as said actuation means (4) are additionally configured to apply thrust such that the part (1) vibrates. The frequency and nominal value of the thrust, in addition to the parameters of the actuation means (4), can be varied by means of the control unit (7) while carrying out said modal analysis. As an alternative to the actuation means (4), the part (1) can be energized such that it vibrates by means of pre-machining or partially machining the part (1) manually by means of, for example, an impact hammer or any other shaker-like element.

The third option can be carried out after the first option or the second option. Hence, there is an initial assessment of at least the vibration zones and the actuation means (4) as well as the accelerometers (8) are therefore more efficiently arranged in the application of the third option to discern the behavior of the part (1) with regards to the vibrations when machining same.

As described above, the actuation means (4) and the fixing means (6) allow quickly and easily varying the arrangement of the actuation means (4) in the part (1). The arrangement of the actuation means (4) in the part (1) is therefore preferably varied in the energizations of the part (1) to more efficiently apply the second option and/or the third option. with the same purpose and for the third option, the arrangement of the aforementioned accelerometers (8) is also varied in the energizations of the part (1).

The method additionally comprises carrying out a residual stress relaxation after completely or partially machining the part (1). This is possible given that the system (2) is additionally configured such that it can energize the part (1) using the actuation means (4). Said relaxation can be carried out with the arrangement of the actuation means (4) which is the same as the one used when machining the part (1), i.e., without requiring specific preparation.

To carry out residual stress relaxation, the part (1) is make to vibrate according to the natural frequency of the part (1) itself, thereby obtaining a greater vibration effect. Said vibration being induced in the part (1) using the actuation means (4) and the control unit (7) such that heat accumulates in the part (1) causing an infinitesimal temperature increase inside the part (1). Transmitting or inducing these vibrations in the part (1) involves transmitting energy to the part (1) whereby the dislocations generated by the vibrations during machining are repositioned and move to a lower stress level. The residual stresses in the part (1) are therefore reduced, improving the surface finish.

The system (2) comprises interaction means (9) between the operator and the control unit (7), which collects and processes data generated in the application of the method which includes, for example, the information collected by the accelerometers (8). Said interaction means (9) comprise a device for viewing the generated data in addition to a device for inputting information to manage the described steps according to the operator's will and the requirements of the part (1) to actively dampen vibrations such that a valid part (1) is obtained after machining.

The system (2) additionally comprises power supply means (10). These means (10) comprise a supply unit for supplying power to itself, such as a battery, and/or a supply point for being supplied with power by means of a power source, such as for example, a portable generator.

## Claims

1. A method for controlling vibrations in parts (1), the parts (1) being susceptible to bending deformation when machined, **characterized in that** it comprises the steps of:
- selecting a system (2) comprising displacement means (3), actuation means (4) and fixing means (6);
- displacing the system (2) to the part (1) using the displacement means (3);
- fixing the actuation means (4) firmly to the part (1) using the fixing means (6); and
- applying a force against the part (1) using the actuation means (4) in order to actively dampen vibrations when machining the part (1).

2. The method according to claim 1, **characterized in that** the fixing means (6) fix the actuation means (4) to the part (1) by magnetism, pneumatic coupling or hydraulic coupling such that the part (1) is kept intact.

3. The method according to claim 1 or 2, **characterized in that** it additionally comprises using at least one accelerometer (8) arranged to discern the vibrations of the part (1).

4. The method according to claim 3, **characterized in that** the actuation means (4) act depending on the vibrations of the part (1).

5. The method according to any one of claims 1 to 3, **characterized in that** the actuation means (4) act according to a bandwidth between 20-500 Hz in order to actively dampen vibrations when machining the part (1).

6. The method according to any one of claims 1 to 5, **characterized in that** it additionally comprises obtaining vibration zones of the part (1) before machining the part (1) by means of applying a "finite element method".

7. The method according to any one of claims 1 to 6, **characterized in that** it additionally comprises obtaining vibration zones of the part (1) before machining the part (1) by means of observing the part (1) while it vibrates.

8. The method according to any one of claims 3 to 7, **characterized in that** it additionally comprises obtaining vibration zones of the part (1) before machining the part (1) by means of an experimental modal analysis of the part (1).

9. The method according to claim 7, **characterized in that** the part (1) is made to vibrate using the actuation means (4) in order to carry out the observation.

10. The method according to claim 8, **characterized in that** the part (1) is made to vibrate using the actuation means (4) in order to carry out the experimental modal analysis of the part (1).

11. The method according to any one of claims 1 to 10, **characterized in that** it additionally comprises carrying out a residual stress relaxation after machining the part (1).

12. The method according to claim 11, **characterized in that** in order to carry out the residual stress relaxation the part (1) is made to vibrate using the actuation means (4).

## Patentansprüche

1. Verfahren zur Steuerung von Schwingungen in Teilen (1), wobei die Teile (1) unter maschineller Bearbeitung anfällig für Biegeverformung sind, **dadurch gekennzeichnet, dass** es die folgenden Schritte aufweist:
- Bereitstellen eines Systems (2), das Bewegungseinrichtungen (3), Betätigungseinrichtungen (4) und Fixiereinrichtungen (6) aufweist;
- Bewegen des Systems (2) zu dem Teil (1) unter Verwendung der Bewegungseinrichtungen (3);
- festes Fixieren der Betätigungseinrichtungen (4) an dem Teil (1) unter Verwendung der Fixiereinrichtungen (6); und
- Anlegen einer Kraft gegen das Teil (1) unter Verwendung der Betätigungseinrichtungen (4), um während der maschinellen Bearbeitung des Teils (1) Schwingungen aktiv zu dämpfen.

2. Verfahren nach Anspruch 1, **dadurch gekennzeichnet, dass** die Fixiereinrichtungen (6) die Betätigungseinrichtungen (4) mittels Magnetismus, pneumatischer Kopplung oder hydraulischer Kopplung an dem Teil (1) fixieren, so dass das Teil (1) intakt bleibt.

3. Verfahren nach Anspruch 1 oder 2, **dadurch gekennzeichnet, dass** es zusätzlich aufweist: Verwenden mindestens eines Beschleunigungssensors (8), der konfiguriert ist, um die Schwingungen des Teils (1) zu detektieren.

4. Verfahren nach Anspruch 3, **dadurch gekennzeichnet, dass** die Betätigungseinrichtungen (4) in Abhängigkeit von den Schwingungen des Teils (1) tätig werden.

5. Verfahren nach einem der Ansprüche 1 bis 3, **dadurch gekennzeichnet, dass** die Betätigungseinrichtungen (4) einen Arbeitsbereich mit einer Bandbreite zwischen 20 bis 500 Hz haben, um während der maschinellen Bearbeitung des Teils (1) Schwingungen aktiv zu dämpfen.

6. Verfahren nach einem der Ansprüche 1 bis 5, **dadurch gekennzeichnet, dass** es zusätzlich aufweist: Bestimmen von Schwingungszonen des Teils (1) vor der maschinellen Bearbeitung des Teils (1) durch Anwenden eines "Finite-Elemente-Verfahrens".

7. Verfahren nach einem der Ansprüche 1 bis 6, **dadurch gekennzeichnet, dass** es zusätzlich aufweist: Bestimmen von Schwingungszonen des Teils (1) vor der maschinellen Bearbeitung des Teils (1) durch Beobachten des Teils (1), während es schwingt.

8. Verfahren nach einem der Ansprüche 3 bis 7, **dadurch gekennzeichnet, dass** es zusätzlich aufweist: Bestimmen von Schwingungszonen des Teils (1) vor der maschinellen Bearbeitung des Teils (1) durch eine experimentelle Modalanalyse des Teils (1).

9. Verfahren nach Anspruch 7, **dadurch gekennzeichnet, dass** das Teil (1) unter Verwendung der Betätigungseinrichtungen (4) in Schwingungen versetzt wird, um die Beobachtung durchzuführen.

10. Verfahren nach Anspruch 8, **dadurch gekennzeichnet, dass** das Teil (1) unter Verwendung der Betätigungseinrichtungen (4) in Schwingungen versetzt wird, um die experimentelle Modalanalyse des Teils (1) durchzuführen.

11. Verfahren nach einem der Ansprüche 1 bis 10, **dadurch gekennzeichnet, dass** es zusätzlich aufweist: Durchführen einer Restspannungsrelaxation nach der maschinellen Bearbeitung des Teils (1).

12. Verfahren nach Anspruch 11, **dadurch gekennzeichnet, dass** zum Durchführen der Restspannungsrelaxation das Teil (1) unter Verwendung der Betätigungseinrichtungen (4) in Schwingungen versetzt wird.

## Revendications

1. Procédé de commande de vibrations dans des pièces (1), les pièces (1) étant sujettes à déformation en flexion lorsqu'elles sont usinées, **caractérisé en ce qu'**il comprend les étapes de :
- sélection d'un système (2) comprenant des moyens de déplacement (3), des moyens d'actionnement (4) et des moyens de fixation (6) ;
- déplacement du système (2) vers la pièce (1) à l'aide des moyens de déplacement (3) ;
- fixation des moyens d'actionnement (4) solidement à la pièce (1) à l'aide des moyens de fixation (6) ; et
- application d'une force contre la pièce (1) à l'aide des moyens d'actionnement (4) afin d'amortir activement des vibrations lors de l'usinage de la pièce (1).

2. Procédé selon la revendication 1, **caractérisé en ce que** les moyens de fixation (6) fixent les moyens d'actionnement (4) à la pièce (1) par magnétisme, couplage pneumatique ou couplage hydraulique pour que la pièce (1) soit gardée intacte.

3. Procédé selon la revendication 1 ou 2, **caractérisé en ce qu'**il comprend de surcroît l'utilisation d'au moins un accéléromètre (8) agencé pour discerner les vibrations de la pièce (1).

4. Procédé selon la revendication 3, **caractérisé en ce que** les moyens d'actionnement (4) agissent selon les vibrations de la pièce (1).

5. Procédé selon l'une quelconque des revendications 1 à 3, **caractérisé en ce que** les moyens d'actionnement (4) agissent selon une bande passante comprise entre 20 et 500 Hz afin d'amortir activement des vibrations lors de l'usinage de la pièce (1).

6. Procédé selon l'une quelconque des revendications 1 à 5, **caractérisé en ce qu'**il comprend de surcroît l'obtention de zones de vibration de la pièce (1) avant usinage de la pièce (1) au moyen de l'application d'une « méthode des éléments finis ».

7. Procédé selon l'une quelconque des revendications 1 à 6, **caractérisé en ce qu'**il comprend de surcroît l'obtention de zones de vibration de la pièce (1) avant usinage de la pièce (1) au moyen de l'observation de la pièce (1) pendant qu'elle vibre.

8. Procédé selon l'une quelconque des revendications 3 à 7, **caractérisé en ce qu'**il comprend de surcroît l'obtention de zones de vibration de la pièce (1) avant usinage de la pièce (1) au moyen d'une analyse de modèle expérimental de la pièce (1).

9. Procédé selon la revendication 7, **caractérisé en ce que** la pièce (1) est amenée à vibrer à l'aide des moyens d'actionnement (4) afin de réaliser l'observation.

10. Procédé selon la revendication 8, **caractérisé en ce que** la pièce (1) est amenée à vibrer à l'aide des moyens d'actionnement (4) afin de réaliser l'analyse de modèle expérimental de la pièce (1).

11. Procédé selon l'une quelconque des revendications 1 à 10, **caractérisé en ce qu'**il comprend de surcroît la réalisation d'une relaxation des contraintes résiduelles après usinage de la pièce (1).

12. Procédé selon la revendication 11, **caractérisé en ce qu'**afin de réaliser la relaxation des contraintes résiduelles, la pièce (1) est amenée à vibrer à l'aide des moyens d'actionnement (4).
